# EUROPÄISCHE PATENTSCHRIFT

(11) **EP 3 115 886 B1**
(45) Veröffentlichungstag und Bekanntmachung des Hinweises auf die Patenterteilung: **14.04.2021**
(21) Anmeldenummer: 15175734.1
(22) Anmeldetag: 07.07.2015
(51) Int. Cl.: G06F 3/16, G10L 15/22, B60R 16/037, G10L 13/027, H04M 3/493, G01C 21/36

(54) **VERFAHREN ZUM BETREIBEN EINES SPRACHSTEUERUNGSSYSTEMS UND SPRACHSTEUERUNGSSYSTEM**
METHOD FOR OPERATING A VOICE CONTROLLED SYSTEM AND VOICE CONTROLLED SYSTEM
PROCEDE DE FONCTIONNEMENT D'UN SYSTEME DE COMMANDE VOCALE ET SYSTEME DE COMMANDE VOCALE

(43) Veröffentlichungstag der Anmeldung: 11.01.2017
(73) Patentinhaber: Volkswagen Aktiengesellschaft, 38440 Wolfsburg (DE)
(72) Erfinder: Lüddecke, Daniel, 39108 Magdeburg (DE); Spika, Dr. Marius, 38104 Braunschweig (DE); Schneider, Jens, 39108 Magdeburg (DE); Berner, Eva, 38106 Braunschweig (DE)

(56) Entgegenhaltungen:
- US-A1- 2011 301 952
- US-A1- 2013 322 634

## Beschreibung

Die Erfindung betrifft ein Verfahren zum Betreiben eines Sprachsteuerungssystems, insbesondere in einem Fahrzeug. Sie betrifft ferner ein Sprachsteuerungssystem, insbesondere in einem Fahrzeug, mit einer Spracheingabeerfassungseinheit, durch die eine Spracheingabe mit zumindest zwei Anweisungen erfassbar ist, die eine Eingabereihenfolge aufweisen. Das Sprachsteuerungssystem umfasst ferner zumindest eine Ausführungseinrichtung, durch die anhand der Anweisungen der erfassten Spracheingabe zumindest zwei Systemantworten erzeugbar sind, und eine Steuereinheit, durch die anhand der Systemantworten Ausgabedaten erzeugbar sind. Es umfasst zudem zumindest eine Ausgabeeinrichtung, die den Ausgabedaten zugeordnet ist und durch die die Ausgabedaten ausgebbar sind. Die Erfindung betrifft ferner ein Fahrzeug.

Sprachsteuerungssysteme finden ein breites Anwendungsspektrum für Bediensysteme. Dies betrifft gleichermaßen die Bedienung von Geräten sowie die Erledigung fernmündlicher Aufgaben mittels Sprachcomputer, beispielsweise Telefon-Banking. Auch hat sich die Bedienung von Einrichtungen eines Fahrzeugs über Spracheingaben als wesentliches Merkmal aktueller Benutzerschnittstellen im Fahrzeug etabliert. Beispielsweise werden zur Eingabe komplexer Sachverhalte entsprechende Informationen durch ein Sprachdialogsystem sequentiell vom Nutzer abgefragt.

Ein wichtiges Ziel bei der Weiterentwicklung von Sprachsteuerungssystemen ist es, dem Nutzer komplexe Eingaben in natürlicher Sprache zu ermöglichen. Dabei soll die integrierte Bedienung möglichst vieler verschiedener Funktionen ermöglicht werden, beispielsweise für unterschiedliche Anwendungen eines Computers oder Einrichtungen in einem Fahrzeug. Ferner soll der Nutzer mehrere Eingaben, die verschiedene Funktionen betreffen, miteinander kombinieren können, etwa in einem Satz. Dies wirft allerdings die Frage auf, wie eine Rückmeldung des Systems an den Nutzer aussehen kann, etwa um die Ausführung mehrerer Funktionen zu signalisieren, die in einem einzigen Satz aufgerufen wurden.

Bei der in der DE 10 2013 207 018 A1 beschriebenen Anzeige- und Bedienvorrichtung in einem Fahrzeug werden mehrere graphische Objekte gleichzeitig angezeigt, wobei die Größe und Anordnung der Objekte nach einem Prioritätswert bestimmt wird, der von der Häufigkeit einer Auswahl durch den Benutzer abhängt.

Der vorliegenden Erfindung liegt die Aufgabe zugrunde, ein Verfahren zum Betreiben eines Sprachsteuerungssystems und ein Sprachsteuerungssystem zur Verfügung zu stellen, durch die eine Sprachsteuerung mittels natürlicher Sprache auf intuitive und einfache Weise ermöglicht wird.

Erfindungsgemäß wird diese Aufgabe durch ein Verfahren mit den Merkmalen des Anspruchs 1 sowie durch ein Sprachsteuerungssystem mit den Merkmalen des Anspruchs 9 und ein Fahrzeug mit den Merkmalen des Anspruchs 10 gelöst. Vorteilhafte Ausgestaltungen und Weiterbildungen ergeben sich aus den abhängigen Ansprüchen.

Bei dem erfindungsgemäßen Verfahren zum Betreiben eines Sprachsteuerungssystems, insbesondere in einem Fahrzeug, wird zunächst eine Spracheingabe mit zumindest zwei Anweisungen erfasst, die eine Eingabereihenfolge aufweisen. Anschließend werden anhand der Anweisungen der erfassten Spracheingabe zumindest zwei Systemantworten erzeugt. Anhand der Systemantworten werden Ausgabedaten erzeugt, die Ausgabezeitdaten umfassen. Dabei ist den Ausgabedaten zumindest eine Ausgabeeinrichtung zugeordnet ist und die Ausgabedaten werden anhand der Ausgabezeitdaten durch die Ausgabeeinrichtung ausgegeben.

Das Sprachsteuerungssystem kann insbesondere in einem Fahrzeug angeordnet sein.

Bei einer "Spracheingabe" im Sinne der Erfindung wird eine akustisch messbare Äußerung des Nutzers erfasst, insbesondere ein oder mehrere gesprochene Sätze, Ausdrücke und/oder Begriffe. Der Beginn und das Ende einer Spracheingabe können auf verschiedene, an sich bekannte Weise signalisiert oder automatisch vom System erkannt werden. Beispielsweise kann ein *push-to-talk*-Schalter (PTT) eingesetzt werden, den der Nutzer betätigt, um eine Spracheingabe zu tätigen. Ferner können Äußerungen nach dem Start einer Sprachsteuerungsfunktion als Spracheingaben erfasst werden. Zudem können Äußerungen erfasst und vom System durch den Kontext als Spracheingaben identifiziert werden.

Die Spracheingabe wird durch das Sprachsteuerungssystem verarbeitet, wobei an sich bekannte Methoden eingesetzt werden können. Typischerweise wird durch einen Spracherkenner anhand der erfassten Audiodaten ein maschinenlesbarer Text erzeugt (*automated speech recognition,* ASR). Ausgehend von diesem wird dann eine semantische Analyse des Textes durchgeführt (*natural language understanding,* NLU), etwa durch eine Schlagworterkennung. So kann beispielsweise ein gesprochener Text transkribiert und als Textnachricht verschickt werden oder es können Eingaben für ein Navigationssystem vorgenommen werden. Die Verarbeitung der Spracheingabe kann allerdings auch auf beliebige andere Art vorgenommen werden.

Die Spracheingabe umfasst erfindungsgemäß zumindest zwei "Anweisungen". Darunter werden beispielsweise Wörter, Ausdrücke und Begriffe sowie Sätze und Satzfragmente verstanden, die jeweils einem Befehl an das System entsprechen. Dies kann etwa der Aufruf einer Funktion oder Einrichtung sein, Parameter können übergeben werden und Informationen können über einen Dialog abgefragt werden. Die Erfassung der Spracheingabe umfasst hierbei diejenigen Verarbeitungsschritte, durch die einzelne Anweisungen in der Spracheingabe erkannt werden.

Bedeutsam für die Erfindung ist dabei, dass zwei oder mehrere Anweisungen in einer Spracheingabe eingegeben werden. Der Nutzer erhält somit vorteilhafterweise die Möglichkeit, mehrere Anweisungen zusammenzufassen und eine komplexe Steuerung des Systems auszuführen. Dabei werden die Anweisungen in einer bestimmten Eingabereihenfolge eingegeben. Diese Eingabereihenfolge wird insbesondere dadurch definiert, dass die zu den Anweisungen gehörigen Wörter, Ausdrücke, Sätze oder Satzfragmente in einer bestimmten Reihenfolge gesprochen werden.

Anhand der Anweisungen werden "Systemantworten" erzeugt, wobei damit alle Reaktionen des Systems auf die Anweisungen umfasst sind. Dies umfasst insbesondere Daten zu Rückmeldungen zum Durchführen der aus einzelnen Anweisungen generierten Befehle durch Ausführungseinrichtungen oder zum Vorbereiten einer solchen Durchführung. Eine Systemantwort in diesem Sinne kann etwa Informationen darüber umfassen, dass eine durch die Anweisung aufgerufene Ausführungseinrichtung aktiviert oder eine bestimmte Funktion der Ausführungseinrichtung ausgeführt wird oder wurde, insbesondere mit Parametern, die durch die Anweisung vorgegeben sind. Die Systemantwort umfasst in diesem Fall etwa Daten mit Informationen darüber, ob und in welcher Art die erfassten Anweisungen ausgeführt werden und welche Rückmeldung von den jeweiligen Ausführungseinrichtungen erzeugt wurde.

Ferner können etwa Funktionen aufgerufen werden, die nicht sofort ausgeführt werden können, zum Beispiel weil weitere Eingaben des Nutzers nötig sind oder weil die Ausführung nur zu bestimmten Zeitpunkten möglich ist. In diesem Fall besteht die Systemantwort in der Rückmeldung des Systems, ob die Anweisung weiterverarbeitet wird und in welcher Art dies erfolgt. Die Systemantworten können auch Fehlermeldungen umfassen, etwa wenn eine Anweisung nicht ausgeführt werden kann oder nicht verstanden wurde, oder sie können Rückmeldungen des Sprachsteuerungssystems selbst umfassen.

Durch die Erzeugung der Systemantworten stehen dem System also Daten über den Status der Ausführung der Anweisungen zur Verfügung. Um dem Nutzer Informationen über den Status der Ausführung der von ihm zuvor eingegebenen Anweisungen auszugeben, werden nun Ausgabedaten erzeugt. Diesen sind jeweils Ausgabeeinrichtungen zugeordnet, durch welche die Ausgabedaten ausgegeben werden können. Beispielsweise kann eine einzige Ausgabeeinrichtung verwendet werden, um die Ausgabedaten zu allen Anweisungen auszugeben oder es können verschiedene Systemantworten verschiedenen Ausgabeeinrichtungen zugeordnet werden. Insbesondere kann eine Anzeigeeinrichtung verwendet werden, die eine visuelle Ausgabe erlaubt, oder eine akustische Ausgabeeinrichtung mit einem Lautsprecher, die etwa eine Ausgabe sprachlicher Ausgabedaten erlaubt. Ferner kann eine Ausgabeeinrichtung ein haptisch erfassbares Signal ausgeben, etwa eine Vibration, oder es kann beispielsweise eine Textnachricht erzeugt, gespeichert und/oder an eine andere Einrichtung übertragen werden.

Verschiedene Ausgabeeinrichtungen können gleichzeitig oder alternativ zueinander verwendet werden. Die mit einer Ausgabeeinrichtung ausgegebenen Ausgabedaten können zu allen oder einzelnen Anweisungen gehören. Insbesondere kann bei der Ausgabe ausgewählt werden, welche Ausgebeeinrichtung für eine Ausgabe besonders geeignet ist, oder es können Ausgabedaten für die gleiche Anweisung von mehreren Ausgabeeinrichtungen gleichzeitig oder nacheinander ausgegeben werden, um eine redundante Ausgabe zu erreichen und die Information des Nutzers sicherzustellen.

Die zeitliche Abfolge der Ausgabe von Ausgabedaten zu mehreren Anweisungen wird anhand von Ausgabezeitdaten bestimmt, die von den Ausgabedaten umfasst sind. Dabei können Informationen zur Abfolge von Ausgaben zu verschiedenen Anweisungen umfasst sein, Ausgaben können gleichzeitig erfolgen oder eine bestimmte Dauer aufweisen.

Insbesondere definieren die Ausgabezeitdaten den zeitlichen Ablauf der Ausgabe, sowohl für eine Ausgabeeinrichtung als auch, bei der Ausgabe der Ausgabedaten durch verschiedene Ausgabeeinrichtungen, für mehrere Ausgabeeinrichtungen.

Es sind den Systemantworten Ausführungseinrichtungen zugeordnet, für die Prioritäten definiert sind. Die Ausgabezeitdaten werden in Abhängigkeit von den Prioritäten der jeweils zugeordneten Ausführungseinrichtungen erzeugt. Die Ausgabe der Ausgabedaten kann dadurch vorteilhafterweise in einer zeitlichen Abfolge durchgeführt werden, welche an die jeweiligen Ausführungseinrichtungen angepasst ist.

Insbesondere werden anhand der Anweisungen Funktionen von Ausführungseinrichtungen ausgeführt. Daten über den Status der Ausführung dieser Funktionen sind von den Systemantworten umfasst. Bei der Erzeugung der Ausgabedaten, insbesondere der Ausgabezeitdaten, kann nun berücksichtigt werden, welche Ausführungseinrichtungen den jeweiligen Systemantworten zugeordnet sind. Die erfolgt anhand von "Prioritäten", durch die eine Rangfolge verschiedener Ausführungseinrichtungen und eine Priorisierung der entsprechenden Systemantworten definiert ist. Durch die Berücksichtigung initial festgelegter Prioritäten kann die zeitliche Abfolge der Ausgabe bestimmt werden. Insbesondere können Systemantwortklassen definiert und priorisiert werden. Die Prioritäten können insbesondere für verschiedene Ausgabeeinrichtungen unterschiedlich sein. Beispielsweise können für die visuelle Ausgabe andere Prioritäten als für eine akustische Ausgabe definiert sein. Die Prioritäten erlauben etwa einen Vergleich der Priorität verschiedener Systemantworten und damit eine Bestimmung der Ausgabereihenfolge.

Bei einer Weiterbildung werden die Ausgabezeitdaten so erzeugt, dass der gleichen Ausführungseinrichtung zugeordnete Ausgabedaten nacheinander oder gleichzeitig ausgegeben werden. Dadurch werden dem Nutzer vorteilhafterweise die Ausgabedaten so ausgegeben, dass ein Wechsel zwischen den Ausgaben für verschiedene Ausgabeeinrichtungen vermieden wird, falls mehrere Systemantworten zur gleichen Ausführungseinrichtung gehören.

Insbesondere können die Ausgabezeitdaten sowohl in Abhängigkeit von der Eingabereihenfolge als auch in Abhängigkeit von den jeweils zugeordneten Ausführungseinrichtungen erzeugt werden. Dabei können beispielsweise solche Ausgaben zusammengefasst werden, die sich auf die gleiche Ausführungseinrichtung beziehen. Beispielsweise kann dadurch ein häufiges Wechseln zwischen Ausgaben für verschiedene Ausführungseinrichtungen vermieden werden, wenn mehrere Anweisungen zur gleichen Ausführungseinrichtung erfasst wurden, die aber nicht notwendigerweise direkt aufeinander folgen. Es können beispielsweise Ausgaben zu einer Ausführungseinrichtung gruppiert ausgegeben werden, wobei dennoch die Eingabereihenfolge berücksichtigt werden kann.

Die Prioritäten, die für die Ausführungseinrichtungen definiert sind, können eine weitere Priorisierung für verschiedene Systemantworten der gleichen Ausführungseinrichtungen umfassen. Beispielsweise können bestimmte Systemantworten einer Ausführungseinrichtung eine höhere Priorität haben als andere Systemantworten der gleichen Ausführungseinrichtung. Dies erlaubt die Festlegung einer Rangfolge für Systemantworten, die der gleichen Ausführungseinrichtung zugeordnet sind.

Bei einer Weiterbildung des erfindungsgemäßen Verfahrens umfassen die Ausgabedaten akustische Ausgabedaten für zumindest eine akustische Ausgabeeinrichtung. Dadurch können dem Nutzer vorteilhafterweise Rückmeldungen zum Status der Durchführung einzelner Anweisungen über ein akustisches System ausgegeben werden.

Die akustische Ausgabeeinrichtung kann dabei insbesondere einen oder mehrere Lautsprecher umfassen und/oder mit einem Multimediasystem gekoppelt sein. Insbesondere kann eine Wiedergabeeinrichtung, etwa für ein Radio, verwendet werden. Dies bietet insbesondere in einem Fahrzeug den Vorteil, dass der Nutzer die ausgegebenen Informationen erfassen kann, ohne den Blick vom Verkehrsgeschehen abwenden zu müssen.

Die Ausbildung des erfindungsgemäßen Verfahrens umfassend die Ausgabedaten visuelle Ausgabedaten für zumindest eine Anzeigeeinrichtung. Dem Nutzer können dadurch vorteilhafterweise Informationen in visueller Weise dargestellt werden.

Als Anzeigeeinrichtung kann dabei prinzipiell jede Einrichtung verwendet werden, die eine Ausgabe visueller Ausgabedaten erlaubt. Insbesondere kann dies etwa das Display eines Bildschirms sein, etwa ein Bildschirm eines Computers oder einer mobilen Nutzereinrichtung. Ferner können Sichtfeldanzeigen, etwa in einem Fahrzeug, verwendet werden oder Systeme aus dem Bereich der erweiterten Realität (*augmented reality*).

Es werden anhand der Ausgabezeitdaten zumindest zwei Systemantworten bestimmt und die diesen Systemantworten zugeordneten visuellen Ausgabedaten werden gleichzeitig durch die Anzeigeeinrichtung ausgegeben. Dadurch können vorteilhafterweise mehrere visuelle Ausgabedaten gleichzeitig angezeigt werden.

Bei einer Weiterbildung umfasst die Anzeigeeinrichtung eine Anzeigefläche und die gleichzeitig ausgegebenen visuellen Ausgabedaten werden auf der Anzeigefläche nebeneinander und/oder übereinander angeordnet ausgegeben. Dies erlaubt vorteilhafterweise die Definition von übersichtlich angeordneten Bereichen auf einer Anzeigefläche, die bestimmten visuellen Ausgabedaten zugeordnet sind.

Dies erlaubt eine übersichtliche und strukturierte Organisation der ausgegebenen visuellen Ausgabedaten, wobei die Anordnung und Abmessung der auf der Anzeigefläche definierten Bereiche mit der Zeit variieren kann.

Während etwa bei einer akustischen Ausgabe prinzipbedingt mehrere Teile der Ausgabe nacheinander ausgegeben werden, erlauben Anzeigevorrichtungen auch die Anzeige mehrerer visueller Ausgabedaten gleichzeitig. Insbesondere kann eine Ausgabefläche in zwei oder mehrere Bereiche unterteilt werden, die verschiedenen visuellen Ausgabedaten zugeordnet werden. Insbesondere können bei einem so genannten Splitscreen zwei oder mehr Bereiche der Anzeigefläche unter- oder übereinander definiert sein. Die mehreren Bereiche sind dabei nicht notwendigerweise gleich groß. Ferner ist die Größe der Bereiche nicht festgelegt, sondern kann sich etwa im Laufe der Zeit der Ausgabe verändern.

Bei einer Ausbildung wird für jede Anzeigeeinrichtung anhand der Ausgabezeitdaten zumindest eine bevorzugte Systemantwort bestimmt. Anhand der bevorzugten Systemantwort wird eine anschließende Anzeige für die jeweilige Anzeigeeinheit erzeugt. Dabei wird die anschließende Anzeige durch die jeweilige Anzeigeeinheit ausgegeben, nachdem die visuellen Ausgabedaten für die jeweilige Anzeigeeinrichtung ausgegeben worden sind. Dadurch kann vorteilhafterweise definiert werden, welche Informationen durch die Anzeigeeinrichtung angezeigt werden, nachdem die Ausgabe der visuellen Ausgabedaten für die Systemantworten abgeschlossen ist.

Insbesondere wird die anschließende Anzeige für längere Zeit angezeigt als die zu den vorigen Anweisungen gehörenden visuellen Ausgabedaten. Beispielsweise kann das System, indem es die Anweisungen abarbeitet, dem Nutzer eine Reihe von Systemantworten präsentieren, wobei nacheinander für jeweils kurze Zeit eine Anzeige erfolgt. Im Anschluss daran kann das System zu einer Anzeige schalten, die für längere Zeit für den Nutzer relevant ist. Beispielsweise kann es für den Nutzer nur kurzfristig relevant sein, dass eine bestimmte Einstellung der Klimaanlage eines Fahrzeugs vorgenommen wurde, während die Aktivität des Navigationsgeräts desselben Fahrzeugs von längerfristiger Bedeutung ist. In diesem Fall kann die Information, dass eine Einstellung der Klimaanlage vorgenommen wurde, nur kurzzeitig erfolgen, während - unabhängig von der sonstigen Reihenfolge der Anzeige - anschließend an die Abarbeitung der mehreren Anweisungen die Oberfläche des Navigationsgeräts angezeigt wird.

Bei einer Ausbildung werden Ausgabedaten für zumindest zwei unterschiedliche Ausgabeeinrichtungen erzeugt. Die Ausgabezeitdaten werden so erzeugt, dass Ausgabedaten, die der gleichen Systemantwort zugeordnet sind, durch die unterschiedlichen Ausgabeeinrichtungen gleichzeitig ausgegeben werden. Dadurch kann vorteilhafterweise sichergestellt werden, dass die ausgegebenen Informationen über mehrere Ausgabeeinrichtungen gleichzeitig, redundant und für den Nutzer sicher erfassbar ausgegeben werden.

Beispielsweise kann gleichzeitig eine Anzeige und eine akustische Ausgabe erfolgen. Die Ausgabezeitdaten können dabei so erzeugt werden, dass die visuelle Anzeige zu einer Systemantwort angezeigt wird, während die akustische Ausgabe zur gleichen Systemantwort erfolgt. Insbesondere kann dies bei der Ausgabe von gruppierten Systemantworten erfolgen, etwa wenn eine visuelle Anzeige die Ausgabe mehrerer Systemantworten zusammenfasst, während bei der akustischen Ausgabe mehrere Systemantworten nacheinander genannt werden. Nimmt beispielsweise der Nutzer mehrere verschiedene Einstellungen an einer Klimaanlage vor, so kann die visuelle Anzeigeeinrichtung möglicherweise alle gewählten Einstellungen gleichzeitig anzeigen. Zugleich kann die akustische Ausgabe, dass die verschiedenen Einstellungen vorgenommen wurden, für die einzelnen Einstellungen nur nacheinander, nicht gleichzeitig erfolgen. Indem Ausgaben durch verschiedene Ausgabeeinrichtungen miteinander synchronisiert werden, kann eine schnell verständliche und redundante Ausgabe der Ausgabedaten erfolgen, wobei sichergestellt wird, dass der Nutzer die ausgegebenen Informationen leicht erfassen kann.

Das erfindungsgemäße Sprachsteuerungssystem der oben genannten Art ist dadurch gekennzeichnet, dass die Ausgabedaten Ausgabezeitdaten umfassen und die Ausgabedaten anhand der Ausgabezeitdaten ausgebbar sind.

Das erfindungsgemäße Sprachsteuerungssystem ist insbesondere ausgebildet, das vorstehend beschriebene erfindungsgemäße Verfahren zu implementieren. Das Sprachsteuerungssystem weist somit dieselben Vorteile auf wie das erfindungsgemäße Verfahren.

Das erfindungsgemäße Fahrzeug umfasst ein erfindungsgemäßes Sprachsteuerungssystem.

Die Erfindung wird nun anhand von Ausführungsbeispielen mit Bezug zu den Zeichnungen erläutert.
- Figur 1: zeigt ein Ausführungsbeispiel des erfindungsgemäßen Fahrzeugs mit dem erfindungsgemäßen Sprachsteuerungssystem,
- Figur 2: zeigt ein Ausführungsbeispiel des erfindungsgemäßen Verfahrens und
- Figuren 3A und 3B: zeigen Ausführungsbeispiele einer Anzeige mit geteiltem Bildschirm.

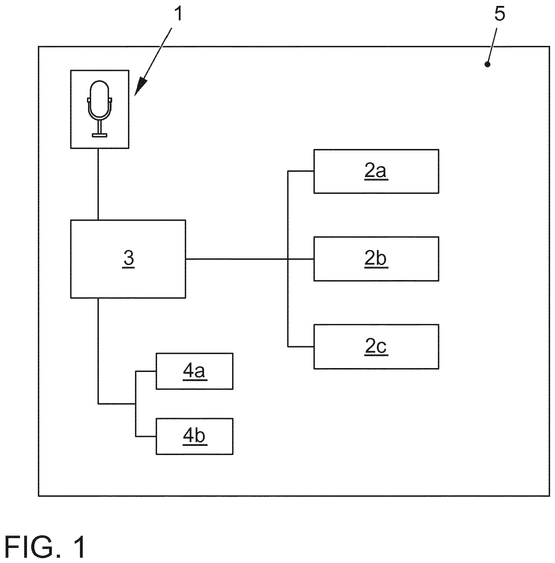

Mit Bezug zu Figur 1 wird ein Ausführungsbeispiel des erfindungsgemäßen Fahrzeugs mit dem erfindungsgemäßen Sprachsteuerungssystem erläutert.

Das Fahrzeug 5 umfasst eine Spracheingabeerfassungseinheit 1. Durch diese können Spracheingaben eines Nutzers erfasst werden, im gezeigten Fall mittels eines Mikrofons. Dabei signalisiert der Nutzer den Beginn einer Spracheingabe, indem er einen push-to-talk-Schalter (PTT) drückt. Der Beginn der Spracheingabe kann auch auf andere Weise erkannt werden, beispielsweise durch automatische Erkennung nach dem Aktivieren einer Funktion, die eine Sprachsteuerung zulässt, oder nach einer Eingabeaufforderung des Systems. Die vom Nutzer gesprochene Spracheingabe wird erfasst und aufgezeichnet.

Insbesondere werden Audiodaten der Spracheingabe aufgezeichnet, allerdings können die Spracheingabedaten nach an sich bekannten Verfahren auch anderweitig erfasst und aufgezeichnet werden. Es wird eine Zwischenspeicherung vorgenommen, so dass die Audiodaten der Spracheingabe für eine weitere Verwendung zur Verfügung stehen.

Die Spracheingabeerfassungseinheit 1 ist mit einer Steuereinheit 3 des Fahrzeugs 5 gekoppelt, die wiederum mit Ausführungseinrichtungen und Ausgabeeinrichtungen gekoppelt ist. Die Ausführungseinrichtungen sind im gezeigten Fall ein Navigationsgerät 2a, ein Emailprogramm 2b und ein Telefon 2c. Als Ausgabeeinrichtungen stehen ein Display 4a und ein Audiosystem 4b zur Verfügung, die mit der Steuereinheit 3 gekoppelt sind.

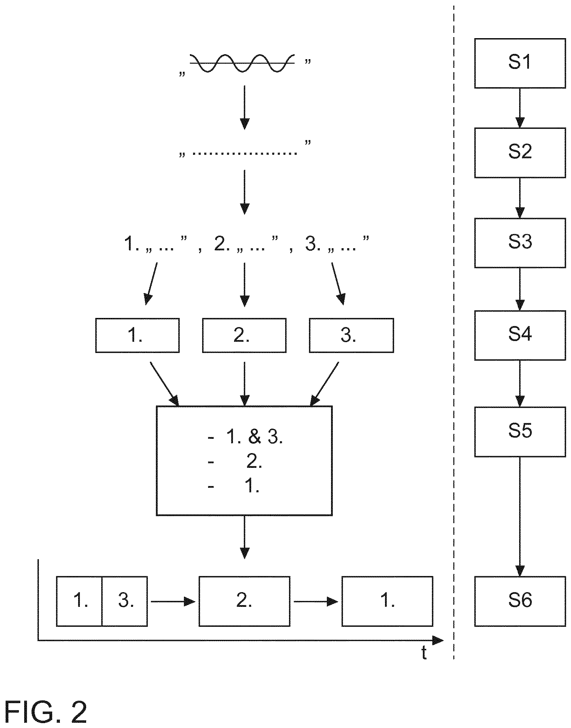

Mit Bezug zu den Figuren 1 und 2 wird ein Ausführungsbeispiel des erfindungsgemäßen Verfahrens erläutert.

Das Verfahren wird insbesondere durch das mit Bezug zu Figur 1 erläuterte erfindungsgemäße Fahrzeug ausgeführt.

In einem ersten Schritt S1 erfasst die Spracheingabeerfassungseinheit 1 die Audiodaten einer Spracheingabe. Aus diesen wird in einem zweiten Schritt S2 ein maschinenlesbarer Text erzeugt. Dies geschieht nach an sich bekannten Verfahren. In einem darauffolgenden Schritt S3 wird eine semantische Analyse des in Schritt S2 erkannten Textes durchgeführt. Im dargestellten Fall erfolgt dies durch eine Schlagworterkennung, es können allerdings auch andere bekannte Verfahren eingesetzt werden. Die dabei erzeugte semantische Analyse umfasst eine Reihe von Anweisungen, im dargestellten Fall drei Anweisungen, die in einer Eingabereihenfolge aufeinanderfolgen.

Anhand der Anweisungen erzeugt die Steuereinheit 3 Systembefehle und leitet diese an die Ausführungseinrichtungen 2a bis 2c weiter. Anhand der von diesen erzeugten Daten zur Ausführung der Anweisungen werden in Schritt S4 Systemantworten erzeugt. Anhand der Systemantworten erzeugt die Steuereinheit 3 in einem weiteren Schritt S5 Ausgabedaten mit Ausgabezeitdaten. Die Ausgabezeitdaten sind in Figur 2 anhand der Rangfolge einer Liste dargestellt. Bei der Erzeugung der Ausgabezeitdaten wird die Eingabereihenfolge berücksichtigt, allerdings werden zusätzlich vordefinierte Prioritäten der Ausführungseinrichtungen 2a bis 2c ebenso berücksichtigt.

Im dargestellten Fall werden visuelle Ausgabedaten erzeugt, die dann an das Display 4a übertragen und von diesem in einem Schritt S6 angezeigt werden. Die Anzeige der zu den Systemantworten gehörigen Ausgabedaten erfolgt in einer zeitlichen Abfolge, die durch die Ausgabezeitdaten definiert ist. Im dargestellten Fall wird zunächst der Anzeigebereich des Displays 4a in zwei Bereiche geteilt, wobei in einem Bereich die zur ersten Anweisung gehörenden Ausgabedaten angezeigt werden, im anderen Bereich des Displays die zur dritten Anweisung gehörigen Ausgabedaten. Anschließend werden die zur zweiten Anweisung gehörigen Ausgabedaten auf dem gesamten Display 4a dargestellt und im Anschluss daran nimmt die Ausgabe zur ersten Anweisung das gesamte Display 4a ein.

In einem weiteren Ausführungsbeispiel wird gleichzeitig zu den visuellen Ausgabedaten im Schritt S5 eine akustische Ausgabe erzeugt. Visuelle und akustische Zeitdaten werden an das Display 4a und das Audiosystem 4b übertragen. Die Ausgabezeitdaten sind dabei so ausgebildet, dass die Ausgabe synchron erfolgt. Das heißt, während im dargestellten Fall die zur ersten und dritten Anweisung gehörigen Ausgabedaten gleichzeitig angezeigt werden, erfolgt die akustische Ausgabe der zur ersten und dritten Anweisung gehörigen akustischen Ausgabedaten. Anschließend erfolgt die visuelle und gleichzeitig akustische Ausgabe der Ausgabedaten zur zweiten Anweisung. Nach Abschluss dieser Ausgabe erfolgt die visuelle Ausgabe zur ersten Anweisung, gegebenenfalls kann eine weitere akustische Ausgabe dazu erfolgen.

Beispielsweise kann die Spracheingabe in Schritt S1 lauten: "Starte eine Navigation zu Tom, schreibe eine E-Mail an ihn und zeige mir die voraussichtliche Ankunftszeit an." Die drei Anweisungen entsprechen in diesem Fall den folgenden Befehlen an das System:
1. Das Navigationssystem soll eine Navigation mit Ziel "Tom" starten,
2. das Emailprogramm soll das Verfassen einer E-Mail an den Empfänger "Tom" starten und
3. das Navigationssystem soll die voraussichtliche Ankunftszeit bei Tom anzeigen.

Anhand dieser Anweisungen werden Systembefehle erzeugt und an die entsprechenden Ausführungseinrichtungen, das Navigationssystem 2a und das Emailprogramm 2b, übertragen. Diese übertragen Daten an die Steuereinheit 3 zurück, dies sind die Systemantworten. Anhand dieser Systemantworten werden nun visuelle und akustische Ausgabedaten erzeugt. Es ist im dargestellten Beispiel vordefiniert, dass das Navigationsgerät 2a eine höhere Priorität als das Emailprogramm 2b hat.

Dabei werden anhand der Prioritäten Ausgabezeitdaten erzeugt, die insbesondere die Reihenfolge der Ausgabe von zu verschiedenen Anweisungen gehörigen Ausgabedaten definieren. Zur gleichen Ausführungseinrichtung gehörige Ausgabedaten werden im gezeigten Fall gruppiert.

Bei der Ausgabe werden nun auf dem Display 4a in einem Splitscreen Informationen zu den Anweisungen "Navigiere zu Tom" und "Zeige die Fahrtzeit an" dargestellt. Synchron dazu erfolgt die akustische Ausgabe: "Navigation zu Tom gestartet, die voraussichtliche Ankunftszeit ist 12:30 Uhr." Im Anschluss daran wechselt die Anzeige auf dem Display 4a zu einer Ansicht des Emailprogramms 2b, wobei das Schreiben einer E-Mail an den Adressaten "Tom" vorbereitet ist. Gleichzeitig dazu erfolgt die akustische Ausgabe: "E-Mail an Tom gestartet, bitte sprechen Sie den Text der Nachricht." Nach dem Schreiben der E-Mail wird das Emailprogramm 2b geschlossen und das Display 4a stellt nunmehr eine Anzeige dar, die sich auf die erste Anweisung, die Navigation zu "Tom", bezieht, insbesondere Informationen über die zu fahrende Route. Je nach Priorisierung kann auch etwa das Emailprogramm 4b anstelle des Navigationsgeräts 2a die höchste Priorität haben. In diesem Fall wird nach dem Abarbeiten der einzelnen Anweisungen am Ende eine Darstellung des Emailprogramms 2b angezeigt.

Die Anzeigefläche des Displays 4a kann während der gesamten Anzeige der Ausgabedaten als Splitscreen in zwei Bereiche aufgeteilt sein, wobei in einem Bereich dauerhaft die Ausgabedaten, die der Ausführungseinrichtung mit der höchsten Priorität zugeordnet sind, angezeigt werden, während im anderen Bereich nacheinander die restlichen Ausgabedaten angezeigt werden. Nach Anzeige aller visuellen Ausgabedaten kann in diesem Fall der Bereich mit den Ausgabedaten der höchsten Priorität vergrößert werden, so dass er die gesamte Anzeigefläche des Displays 4a einnimmt.

Die Priorisierung kann insbesondere anhand der Langlebigkeit des ausgegebenen Informationsgehaltes erfolgen. Dazu können Kontexte definiert werden, denen die einzelnen Ausführungseinrichtungen und Systemantworten zugeordnet sind. Eine solche Priorisierung kann beispielsweise lauten:
1. Navigation
2. Medien/Radio
3. Klima
4. Messaging
5. Telefon

Weitere Kontexte und Anwendungen können entsprechend ergänzt und eingeordnet werden, wobei dies durch eine automatische Vorgabe der Prioritäten erfolgen kann oder mittels Eingaben des Nutzers.

In einem weiteren Ausführungsbeispiel werden Ausgabedaten für mehrere Ausführungseinrichtungen erzeugt, im dargestellten Fall visuelle Ausgabedaten für das Display 4a und akustische Ausgabedaten für das Audiosystem 4b. Bei der Erzeugung der Zeitdaten wird dabei zunächst eine Reihenfolge zur Ausgabe der akustischen Ausgabedaten erzeugt und die Reihenfolge der Anzeige der visuellen Ausgabedaten wird entsprechend der akustischen Reihenfolge erzeugt. Insbesondere können die Ausgabezeitdaten dabei so erzeugt werden, dass die Ausgabe visuell und akustisch synchron erfolgt. Nach Abschluss der Ausgabe sämtlicher Ausgabedaten wird dann zur Anzeige von Ausgabedaten der Ausführungseinrichtung mit der höchsten Priorität geschaltet.

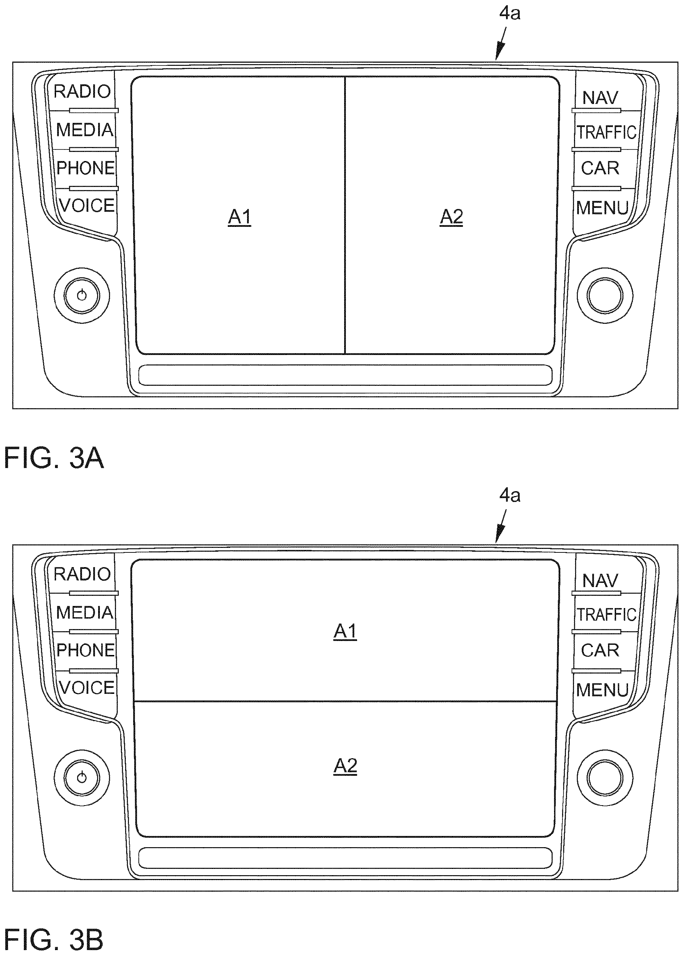

Mit Bezug zu den Figuren 3a und 3b werden Beispiele einer Anzeige mit geteilten Bildschirmen erläutert.

Dargestellt ist das Display 4a des mit Bezug zu Figur 1 erläuterten Fahrzeugs 5, mit dem das mit Bezug zu Figur 2 beschriebene Verfahren ausgeführt wird. Dabei wird die Anzeigefläche des Displays 4a in zwei Hälften unterteilt, die in Figur 3a nebeneinander bzw. in Figur 3b übereinander angeordnet sind. Dadurch wird ein erster Bereich A1 definiert und ein zweiter Bereich A2. Die beiden Bereiche A1 und A2 sind nicht notwendigerweise gleich groß, ferner kann sich die Größe der Bereiche ebenso wie ihre Anordnung mit der Zeit ändern. Beispielsweise kann die Größe eines Bereichs A1 oder A2 daran angepasst werden, welchen Raum die darin angezeigten Ausgabedaten benötigen oder welche Priorität den jeweils zugeordneten Ausführungseinrichtungen zugeordnet ist.

In einem weiteren Beispiel ist die Anzeigefläche des Displays 4a in drei oder mehr Bereiche unterteilt, wobei diese Bereich neben- oder übereinander dargestellt werden können und ferner Kombinationen einer Anordnung neben- oder übereinander möglich sind.

Ferner können sich Bereiche wenigstens zeitweise überlappen, beispielsweise kann ein Bereich als Pop-up so eingeblendet werden, dass er zumindest einen weiteren Bereich auf der Anzeigefläche des Displays 4a überdeckt. Dies kann insbesondere dann ausgeführt werden, wenn der Ausgabe im Hintergrund eine höhere Priorität zugeordnet ist, diese also langlebiger ist als die Datenausgabe im Pop-up.

### Bezugszeichenliste

- 1: Spracheingabeerfassungseinheit
- 2a: Navigationsgerät
- 2b: Emailprogramm
- 2c: Telefon
- 3: Steuereinheit
- 4a: Display
- 4b: Audiosystem
- 5: Fahrzeug
- S1: Audiodaten erfassen
- S2: Texterkennung
- S3: Anweisungen erkennen
- S4: Systemantworten erzeugen
- S5: Ausgabedaten und Ausgabezeitdaten erzeugen
- S6: Visuelle Ausgabedaten anzeigen
- A1: Erster Bereich
- A2: Zweiter Bereich

## Patentansprüche

1. Verfahren zum Betreiben eines Sprachsteuerungssystems, bei dem
- eine Spracheingabe mit zumindest zwei Anweisungen erfasst wird, die eine Eingabereihenfolge aufweisen, wobei dem Sprachsteuerungssystem ein Beginn und ein Ende der Spracheingabe durch den Nutzer signalisiert oder es automatisch vom Sprachsteuerungssystem erkannt wird und wobei die zumindest zwei Anweisungen so in der Spracheingabe eingegeben werden, dass mehrere Anweisungen zusammengefasst sind,
- aus Audiodaten der Spracheingabe ein maschinenlesbarer Text erzeugt wird,
- eine semantische Analyse des maschinenlesbaren Textes durchgeführt wird,
- anschließend anhand der Anweisungen der erfassten Spracheingabe zumindest zwei Systemantworten erzeugt werden,
- wobei die zumindest zwei Systemantworten durch zugeordnete Ausführungseinrichtungen (2a, 2b, 2c) erzeugt werden, wobei für die Ausführungseinrichtungen (2a, 2b, 2c) Prioritäten definiert sind,
- anhand der zumindest zwei Systemantworten zumindest zwei entsprechende Ausgabedaten erzeugt werden, die zumindest zwei entsprechende Ausgabezeitdaten umfassen, wobei jede der Ausgabedaten zumindest einer Ausgabeeinrichtung (4a, 4b) zugeordnet ist,
- wobei die Ausgabezeitdaten in Abhängigkeit von den Prioritäten der jeweils zugeordneten Ausführungseinrichtungen (2a, 2b, 2c) und sowohl in Abhängigkeit von der Eingabereihenfolge als auch in Abhängigkeit von den jeweils zugeordneten Ausführungseinrichtungen (2a, 2b, 2c) erzeugt werden, wobei solche Ausgabedaten, die visuelle Ausgabedaten sind, für eine gemeinsame Ausgabe zusammengefasst werden, die der gleichen Ausführungseinrichtung (2a, 2b, 2c) zugeordnet sind, indem die visuellen Ausgabedaten gleichzeitig durch eine als Anzeigeeinrichtung (4a) ausgebildete Ausgabeeinrichtung (4a, 4b) ausgegeben werden, und
- jede der zumindest zwei Ausgabedaten gemäß der entsprechenden Ausgabezeitdaten durch die zugeordnete Ausgabeeinrichtung (4a, 4b) ausgegeben wird.

2. Verfahren nach Anspruch 1, wobei Z die Ausgabezeitdaten so erzeugt werden, dass der gleichen Ausführungseinrichtung (2a, 2b, 2c) zugeordnete Ausgabedaten nacheinander oder gleichzeitig ausgegeben werden.

3. Verfahren nach einem der vorhergehenden Ansprüche, wobei die Ausgabedaten akustische Ausgabedaten für zumindest eine akustische Ausgabeeinrichtung (4b) umfassen.

4. Verfahren nach einem der vorhergehenden Ansprüche, wobei die Ausgabedaten visuelle Ausgabedaten für zumindest eine Anzeigeeinrichtung (4a) umfassen.

5. Verfahren nach Anspruch 4, wobei anhand der Ausgabezeitdaten zumindest zwei Systemantworten bestimmt werden und die diesen Systemantworten zugeordneten visuellen Ausgabedaten gleichzeitig durch die Anzeigeeinrichtung (4a) ausgegeben werden.

6. Verfahren nach Anspruch 5, wobei die Anzeigeeinrichtung (4a) eine Anzeigefläche umfasst und die gleichzeitig ausgegebenen visuellen Ausgabedaten auf der Anzeigefläche nebeneinander und/oder übereinander angeordnet ausgegeben werden.

7. Verfahren nach einem der Ansprüche 4 bis 6, wobei
für jede Anzeigeeinrichtung (4a) anhand der Ausgabezeitdaten zumindest eine bevorzugte Systemantwort bestimmt wird und
anhand der bevorzugten Systemantwort eine anschließende Anzeige für die jeweilige Anzeigeeinheit (4a) erzeugt wird, wobei
die anschließende Anzeige durch die jeweilige Anzeigeeinheit (4a) ausgegeben wird, nachdem die visuellen Ausgabedaten für die jeweilige Anzeigeeinrichtung (4a) ausgegeben worden sind.

8. Verfahren nach einem der vorhergehenden Ansprüche, wobei
Ausgabedaten für zumindest zwei unterschiedliche Ausgabeeinrichtungen (4a, 4b) erzeugt werden und
die Ausgabezeitdaten so erzeugt werden, dass
Ausgabedaten, die der gleichen Systemantwort zugeordnet sind, durch die unterschiedlichen Ausgabeeinrichtungen (4a, 4b) gleichzeitig ausgegeben werden.

9. Sprachsteuerungssystem mit
- einer Spracheingabeerfassungseinheit (1), durch die eine Spracheingabe mit zumindest zwei Anweisungen erfassbar ist, die eine Eingabereihenfolge aufweisen, wobei dem Sprachsteuerungssystem ein Beginn und ein Ende der Spracheingabe durch den Nutzer signalisierbar oder es automatisch vom Sprachsteuerungssystem erkennbar ist, wobei die zumindest zwei Anweisungen so in der Spracheingabe eingebbar sind, dass mehrere Anweisungen zusammengefasst sind,
- wobei die Spracheingabeerfassungseinheit (1) ausgebildet ist, aus Audiodaten der Spracheingabe ein maschinenlesbarer Text zu erzeugen und eine semantische Analyse des maschinenlesbaren Textes durchzuführen,
- Ausführungseinrichtungen (2a, 2b, 2c), durch die anhand der Anweisungen der erfassten Spracheingabe zumindest zwei Systemantworten erzeugbar sind, wobei die zumindest zwei Systemantworten durch zugeordnete Ausführungseinrichtungen (2a, 2b, 2c) erzeugt werden, für die Prioritäten definiert sind,
- einer Steuereinheit (3), durch die anhand der zumindest zwei Systemantworten zumindest zwei entsprechende Ausgabedaten erzeugbar sind, und
- zumindest einer Ausgabeeinrichtung (4a, 4b), der jede der Ausgabedaten zugeordnet ist und durch die jede der zumindest zwei Ausgabedaten ausgebbar sind,
- wobei die Ausgabedaten zumindest zwei entsprechende Ausgabezeitdaten umfassen, wobei die Ausgabezeitdaten in Abhängigkeit von den Prioritäten der jeweils zugeordneten Ausführungseinrichtungen (2a, 2b, 2c) und sowohl in Abhängigkeit von der Eingabereihenfolge als auch in Abhängigkeit von den jeweils zugeordneten Ausführungseinrichtungen (2a, 2b, 2c) erzeugt werden, wobei solche Ausgabedaten, die visuelle Ausgabedaten sind, für eine gemeinsame Ausgabe zusammengefasst werden, die der gleichen Ausführungseinrichtung (2a, 2b, 2c) zugeordnet sind, indem die visuellen Ausgabedaten gleichzeitig durch eine als Anzeigeeinrichtung (4a) ausgebildete Ausgabeeinrichtung (4a, 4b) ausgegeben werden, und
- wobei jede der zumindest zwei Ausgabedaten gemäß der entsprechenden Ausgabezeitdaten ausgebbar ist.

10. Fahrzeug (5) mit einem Sprachsteuerungssystem nach Anspruch 9.

## Claims

1. Method for operating a voice-control system, in which
- a voice input with at least two instructions having an input sequence is detected, wherein a start and an end of the voice input is signaled to the voice-control system by the user or is automatically recognized by the voice-control system, and wherein the at least two instructions are input into the voice input such that several instructions are combined,
- a machine-readable text from audio data of the voice input is generated,
- a semantic analysis of the machine-readable text is carried out,
- then, at least two system responses are generated, based upon the instructions of the detected voice input,
- wherein the at least two system responses are generated by associated execution devices (2a, 2b, 2c), wherein priorities are defined for the execution devices (2a, 2b, 2c),
- based upon the at least two system responses, at least two corresponding pieces of output data are generated, which comprise at least two corresponding pieces of output time data, wherein each piece of output data is assigned to at least one output device (4a, 4b),
- wherein the output time data are generated as a function of the priorities of the respectively associated execution devices (2a, 2b, 2c) and both as a function of the input sequence and as a function of the respectively associated execution devices (2a, 2b, 2c), wherein such output data, which are visual output data, are combined for a common output, which are assigned to the same execution device (2a, 2b, 2c) by the visual output data being simultaneously output by an output device (4a, 4b) configured as a display device (4a), and
- each of the at least two pieces of output data is output by the associated output device (4a, 4b) according to the corresponding output time data.

2. Method according to claim 1, wherein the output time data are generated such that output data assigned to the same execution device (2a, 2b, 2c) are output sequentially or simultaneously.

3. Method according to one of the preceding claims, wherein the output data comprise acoustic output data for at least one acoustic output device (4b).

4. Method according to one of the preceding claims, wherein the output data comprise visual output data for at least one display device (4a).

5. Method according to claim 4, wherein at least two system responses are determined on the basis of the output time data, and the visual output data assigned to these system responses are simultaneously output by the display device (4a).

6. Method according to claim 5, wherein the display device (4a) comprises a display surface, and the simultaneously output visual output data are output on the display surface side by side and/or arranged one above the other.

7. Method according to one of claims 4 through 6, wherein
at least one preferred system response is determined for each display device (4a), based upon the output time data, and
a subsequent display is generated for the respective display unit (4a), based upon the preferred system response, wherein
the subsequent display is output by the respective display unit (4a) after the visual output data for the respective display device (4a) have been output.

8. Method according to one of the preceding claims, wherein
output data are generated for at least two different output devices (4a, 4b), and
the output time data are generated such that
output data assigned to the same system response are simultaneously output by the different output devices (4a, 4b).

9. Voice-control system having
- a voice input detection unit (1) by means of which a voice input with at least two instructions having an input sequence can be detected, wherein a start and an end of the voice input can be signaled to the voice-control system by the user or can be automatically recognized by the voice-control system, wherein the at least two instructions can be input into the voice input such that several instructions are combined,
- wherein the voice input detection unit (1) is configured to generate a machine-readable text from audio data of the voice input and to carry out a semantic analysis of the machine-readable text,
- execution devices (2a, 2b, 2c), by means of which at least two system responses can be generated, based upon the instructions of the detected voice input, wherein the at least two system responses are generated by associated execution devices (2a, 2b, 2c) for which priorities are defined,
- a control unit (3), by means of which at least two corresponding pieces of output data can be generated, based upon the at least two system responses, and
- at least one output device (4a, 4b), to which each piece of output data is assigned and through which each of the at least two pieces of output data can be output,
- wherein the output data comprise at least two corresponding pieces of output time data, wherein the output time data are generated as a function of the priorities of the respectively associated execution devices (2a, 2b, 2c) and both as a function of the input sequence and as a function of the respectively associated execution devices (2a, 2b, 2c), wherein such output data, which are visual output data, are combined for a common output, which are assigned to the same execution device (2a, 2b, 2c) by the visual output data being simultaneously output by an output device (4a, 4b) configured as a display device (4a), and
- wherein each of the at least two pieces of output data can be output according to the corresponding output time data.

10. Vehicle (5) having a voice-control system according to claim 9.

## Revendications

1. Procédé de fonctionnement d'un système de commande vocale, dans lequel
- une entrée vocale comprenant au moins deux instructions est détectée, lesquelles présentent un ordre d'entrée, un début et une fin de l'entrée vocale étant signalés au système de commande vocale par l'utilisateur ou étant reconnus automatiquement par le système de commande vocale et les au moins deux instructions étant entrées dans l'entrée vocale de telle façon que plusieurs instructions sont assemblées,
- un texte lisible par machine est généré à partir de données audio de l'entrée vocale,
- une analyse sémantique du texte lisible par machine est effectuée,
- ensuite au moins deux réponses du système sont générées au moyen des instructions de l'entrée vocale détectée,
- les au moins deux réponses du système étant générées par des dispositifs d'exécution (2a, 2b, 2c) associés, des priorités étant définies pour les dispositifs d'exécution (2a, 2b, 2c),
- au moins deux données de sortie correspondantes sont générées au moyen des au moins deux réponses du système, qui comprennent au moins deux données horaires de sortie correspondantes, chacune des données de sortie étant associée à au moins un dispositif de sortie (4a, 4b),
- les données horaires de sortie étant générées en fonction des priorités des dispositifs d'exécution (2a, 2b, 2c) respectivement associés et aussi en fonction de l'ordre d'entrée ainsi qu'en fonction des dispositifs d'exécution (2a, 2b, 2c) respectivement associés, de telles données de sortie, lesquelles sont des données de sortie visuelles, qui sont associées au même dispositif d'exécution (2a, 2b, 2c) étant assemblées pour une sortie commune en sortant simultanément les données de sortie visuelles à travers un dispositif de sortie (4a, 4b) conçu comme un dispositif d'affichage (4a) et
- chacune des au moins deux données de sortie étant sortie à travers le dispositif de sortie (4a, 4b) associé conformément aux données horaires de sortie correspondantes.

2. Procédé selon la revendication 1, dans lequel les données horaires de sortie sont générées de telle façon que les données de sortie associées au même dispositif d'exécution (2a, 2b, 2c) sont sorties les unes après les autres ou simultanément.

3. Procédé selon l'une quelconque des revendications précédentes, dans lequel les données de sortie comprennent des données de sortie acoustiques pour au moins un dispositif de sortie acoustique (4b).

4. Procédé selon l'une quelconque des revendications précédentes, dans lequel les données de sortie comprennent des données de sortie visuelles pour au moins un dispositif d'affichage (4a).

5. Procédé selon la revendication 4, dans lequel au moins deux réponses du système sont déterminées au moyen des données horaires de sortie et les données de sortie visuelles associées à ces réponses du système sont sorties simultanément par le dispositif d'affichage (4a).

6. Procédé selon la revendication 5, dans lequel le dispositif d'affichage (4a) comprend une surface d'affichage et les données de sortie visuelles sorties simultanément sont sorties disposées côte à côte et/ou en superposition sur la surface d'affichage.

7. Procédé selon l'une quelconque des revendications 4 à 6, dans lequel
au moins une réponse du système préférée est déterminée pour chaque dispositif d'affichage (4a) au moyen des données horaires de sortie et
un affichage ultérieur est généré pour l'unité d'affichage (4a) respective au moyen de la réponse du système préférée,
l'affichage ultérieur étant sorti à travers l'unité d'affichage (4a) respective, après que les données de sortie visuelles pour le dispositif d'affichage (4a) respectif sont sorties.

8. Procédé selon l'une quelconque des revendications précédentes, dans lequel
des données de sortie sont générées pour au moins deux dispositifs de sortie (4a, 4b) différents et
les données horaires de sortie sont générées de telle façon, que
les données de sortie qui sont associées à une même réponse du système soient sorties simultanément à travers les différents dispositifs de sortie (4a, 4b).

9. Système de commande vocale comprenant
- une unité de détection d'entrées vocales (1), par laquelle une entrée vocale comprenant au moins deux instructions peut être détectée, lesquelles présentent un ordre d'entrée, un début et une fin de l'entrée vocale pouvant être signalés au système de commande vocale par l'utilisateur ou pouvant être reconnus automatiquement par le système de commande vocale et les au moins deux instructions pouvant être entrées dans l'entrée vocale de telle façon que plusieurs instructions sont assemblées,
- l'unité de détection d'entrée vocale (1) étant conçue pour générer un texte lisible par machine à partir de données audio de l'entrée vocale et pour exécuter une analyse sémantique du texte lisible par machine,
- des dispositifs d'exécution (2a, 2b, 2c), par lesquels au moins deux réponses du système peuvent être générées au moyen des instructions de l'entrée vocale détectée, les au moins deux réponses du système étant générées par des dispositifs d'exécution (2a, 2b, 2c) associés, pour lesquels des priorités sont définies,
- une unité de commande (3) par laquelle au moins deux données de sortie correspondantes peuvent être générées au moyen des au moins deux réponses du système et
- au moins un dispositif de sortie (4a, 4b), qui est associé à chacune des données de sortie et par lequel chacune des au moins deux données de sortie peuvent être sorties,
- les données de sortie comprenant au moins deux données horaires de sortie correspondantes, les données horaires de sortie étant générées en fonction des priorités des dispositifs d'exécution (2a, 2b, 2c) respectivement associés et aussi en fonction de l'ordre d'entrée ainsi qu'en fonction des dispositifs d'exécution (2a, 2b, 2c) respectivement associés, de telles données de sortie, lesquelles sont des données de sortie visuelles, qui sont associées au même dispositif d'exécution (2a, 2b, 2c) étant assemblées pour une sortie commune en sortant simultanément les données de sortie visuelles à travers un dispositif de sortie (4a, 4b) conçu comme un dispositif d'affichage (4a) et
- chacune des au moins deux données de sortie pouvant être sortie conformément aux données horaires de sortie correspondantes.

10. Véhicule (5) comprenant un système de commande vocale selon la revendication 9.
